# EUROPEAN PATENT APPLICATION

(11) **EP 3 851 993 A1**
(43) Date of publication of application: **21.07.2021**
(21) Application number: 19859718.9
(22) Date of filing: 06.09.2019
(51) Int. Cl.: G06F 21/64, G06F 11/34

(54) **TRANSACTION AUDIT SYSTEM**

(30) Priority: 11.09.2018 JP 2018169990
(71) Applicant: Atrris Corporation, Tokyo 158-0097 (JP)
(72) Inventor: YASUMITSU Masanori, Tokyo 158-0097 (JP); OUCHI Takanobu, Tokyo 158-0097 (JP); YOKOOHJI Seiichi, Tokyo 158-0097 (JP)
(74) Representative: Clarenbach, Carl-Philipp
(86) International application number: PCT/JP2019/035179
(87) International publication number: WO 2020/054612

(57) **Abstract**

Provided is a transaction audit system that ensures authenticity of data and allows performing an audit work in a short period at low cost. The transaction audit system of this disclosure includes a terminal that constitute a blockchain server, a database that stores master data including automated deployment rule data, and an audit engine. First transaction data is input to the audit engine by the terminal, the audit engine refers to the master data to generate second transaction data, and the first and the second transaction data are each decomposed into a data item and a value of the data item to generate first table information. The data item includes at least a data model name, a version number, an application name, a user name, and an operation date and time. A block for a blockchain is generated based on the first table information and recorded in the blockchain database by the terminal.

## Description

### Technical Field

The present disclosure relates to a transaction audit system.

### Background Art

Transactions (business processes) performed in a company or between companies are executed according to a rule, such as a contract between the companies or the company's regulations. However, there is a case where the transaction is performed not according to the rule to be applied due to a human error, and a case where data regarding the transaction is deliberately tampered. Therefore, conventionally, transaction data output from an application and a business system used for the transaction is managed by a business log management system and the like, internal auditors and external audit firms and the like perform a numerical analysis, a comparative verification with an original transaction, or the like using an audit tool and the like, thereby performing an audit.

For example, Patent Literature 1 discloses a "business management system that includes: a log collection unit that collects a plurality of logs including information on works in a business from a business system and a management table data generation unit that identifies to which business each of the logs belongs based on the information on the work collected by the log collection unit and included in each of the logs and a preliminarily set condition for classifying the works, thus generating data in which the logs belonging to the same business are aggregated as management table data" as a business management system that automatically performs reliable log management and audit without an omission.

### Citation List

### Patent Literature

Patent Literature 1: JP 2016-224819 A

### Summary of Invention

### Technical Problem

However, in the business management system disclosed in Patent Literature 1, since only the transaction result (log) is managed, the basis on which the result is output cannot be obtained. In addition, there is a problem that when a problem, such as a human error and a tampering, occurs, it is difficult to reproduce a situation at the occurrence of the problem, and it takes significant time and cost for data analysis for the audit.

To solve the problem, this disclosure provides a transaction audit system that ensures authenticity of data and allows performing an audit work in a short period at low cost.

### Solution to Problem

A transaction audit system of this disclosure includes a terminal, a database, and an audit engine. The terminal constitutes a blockchain server and includes a blockchain database and an application configured to input first transaction data. The database stores master data. The master data includes automated deployment rule data to generate second transaction data from the first transaction data. The audit engine is connected to the terminal and the database. The first transaction data is input to the audit engine by the terminal. The audit engine refers to the master data to generate the second transaction data. The first transaction data and the second transaction data are each decomposed into a data item and a value of the data item to generate first table information. The data item includes at least a data model name, a version number, an application name, a user name, and an operation date and time. A block for a blockchain is generated based on the first table information and recorded in the blockchain database by the terminal.

### Advantageous Effects of Invention

As described above, according to this disclosure, the authenticity of data is ensured and the audit work can be performed in a short period at low cost.

### Brief Description of Drawings

Fig. 1 is a schematic diagram illustrating an overall configuration of a transaction audit system according to a first embodiment.
Fig. 2 is a function block diagram of a terminal.
Fig. 3 is a schematic diagram illustrating an example of master data.
Fig. 4 is a block diagram illustrating an exemplary hardware configuration of a server device.
Fig. 5 is a function block diagram of an application management unit.
Fig. 6 is a function block diagram of an audit engine.
Fig. 7 is a schematic diagram illustrating an example of table information.
Fig. 8 is a schematic diagram illustrating an exemplary blockchain.
Fig. 9 is a flowchart illustrating a recording process of transaction data.
Fig. 10 is a flowchart illustrating an update process of the transaction data.
Fig. 11 is a schematic diagram illustrating the table information generated from the updated transaction data.
Fig. 12 is a schematic diagram illustrating an overall configuration of a transaction audit system according to a second embodiment.

### Description of Embodiments

The following describes embodiments with reference to accompanying drawings. Although the accompanying drawings illustrate the embodiments and examples of implementation according to a principle of the present disclosure, these drawings are for understanding of the present disclosure and never used for limited interpretation of the present disclosure. The descriptions of this description are merely typical examples and therefore do not limit the claims or application examples of the present disclosure by any means.

### [First Embodiment]

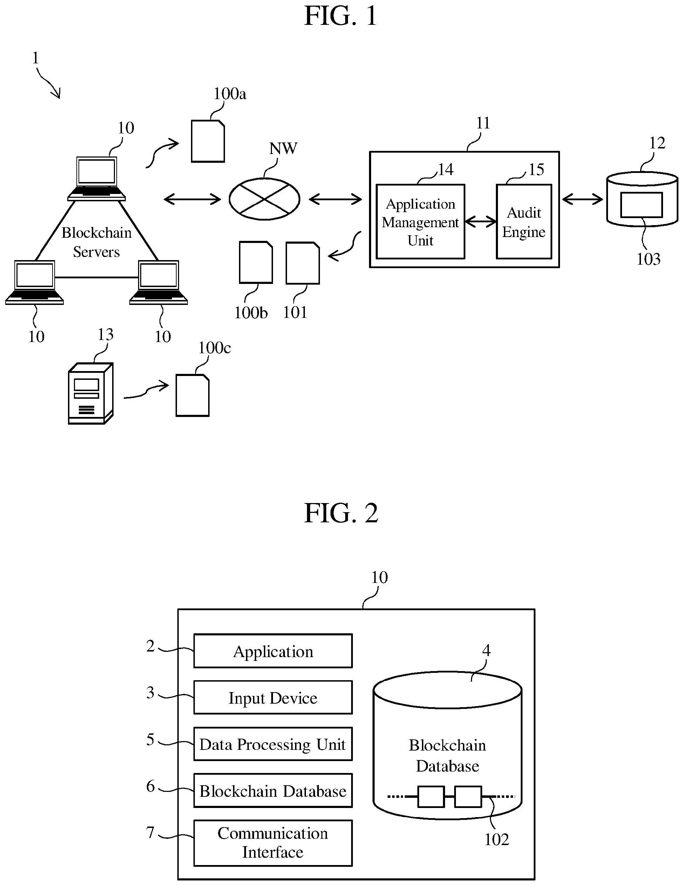

With reference to Figs. 1 to 3, an overall configuration of a transaction audit system 1 according to the first embodiment will be described. The transaction audit system 1 according to the embodiment is a system that is introduced in one company and records transaction data 100 to a blockchain 102 to audit a transaction. The transaction data 100 relates to the transaction performed in the company or between the companies.

The transaction is roughly divided into internal business processing performed based on internal rules of the company and external business processing performed based on external rules, such as contract terms between the companies. The internal business processing includes, for example, a budget management, a personnel payroll management, an inventory management, a cost accounting management, a production management, an asset management, and a cash management. The internal rule is, for example, a rule inside the company and a rule based on accounting criteria, company's regulations, underlying laws and the like. The underlying law is a law specific to an industry to which a company belongs, for example, a civil law, a criminal law, a financial law, and an environmental law.

The external business processing includes, for example, a sales management, a purchase management, an A/R management, an A/P management, a service provision business management, an outsourcing management, and a financial transaction management. The external rule is a rule based on a contract between companies, an oral contract, a rule inside company based on a contract between companies, customary business practices, accounting criteria, regulations, underlying laws, and the like. The contract between companies is not necessarily a document but unwritten rules, such as an oral contract and customary business practices, in some cases.

Fig. 1 is a schematic diagram illustrating an overall configuration of the transaction audit system 1 according to the first embodiment. As illustrated in Fig. 1, the transaction audit system 1 includes a plurality of terminals 10, a server device 11, a database 12, and a business system 13.

The terminals 10 are computers connected to the server device 11 via a network NW, and used in a company to which the transaction audit system 1 of the embodiment is introduced. As the terminal 10, for example, a general-purpose computer, a smart phone, a mobile phone, a personal digital assistant (PDA), a tablet, and a wearable terminal can be used. The terminals 10 are mutually peer-to-peer (P2P) connected, and function as nodes of a blockchain server. As a blockchain platform of the transaction audit system 1, a known one can be employed.

Fig. 2 is a function block diagram of the terminal 10. As illustrated in Fig. 2, an application 2, with which a user performs a transaction, is downloaded to the terminal 10 from the server device 11. The terminal 10 includes an input device 3, a blockchain database 4, a data processing unit 5, a display unit 6, and a communication interface 7.

The input device 3 is an input device, such as a computer mouse and a keyboard, and is configured to input transaction data 100a (first transaction data) to a GUI screen of the application 2 displayed on the display unit 6.

The transaction data 100a is data relating to a transaction performed inside a company or between companies, and means data input from the application 2 to the server device 11. Transaction data 100b (second transaction data) is data generated by the server device 11 in accordance with the input of the transaction data 100a. Transaction data 100c (third transaction data) means data input from the external business system 13 to the terminal 10 or the server device 11. In this Description, the transaction data 100a to 100c are collectively referred to as "transaction data 100" in some cases.

The transaction data 100 includes data items, such as a data model name, information regarding the used application 2, an applied rule, a task item name, a version number, a user name, and an operation date and time, and values of the respective data items. The type of the value of each data item is preliminarily set corresponding to the data item. The data model is information regarding each work in the business, such as an order from a customer and a shipment to the customer. The task item is information regarding the data model, such as an order quantity and a shipment quantity. The value of the data item of the applied rule is, for example, a serial number of the rule.

The data format (format of data) of the transaction data 100 is not specifically limited. The data format of the transaction data 100a input from the application 2 to the server device 11 is, for example, a format of table information. The data format of the transaction data 100c input from the external business system 13 to the server device 11 may be different from the format of the table information.

The data processing unit 5 performs data processing to cause the terminals 10 to function as the nodes of the blockchain server. The data processing unit 5 calculates a hash value using a predetermined hash function based on table information 101 received from the server device 11, and outputs it to the server device 11. The table information 101 is data generated by the server device 11 based on the transaction data 100 and recorded in the blockchain 102. Details of the table information 101 will be described later.

The data processing unit 5 generates a block for the blockchain 102 based on the table information 101 received from the server device 11, and records the block in the blockchain database 4. The data processing unit 5 may record all the table information 101 generated from the transaction data 100 in one blockchain 102, or may generate a plurality of blockchains 102 and record the table information 101 in one blockchain 102 for each relevant transaction data 100. When the blockchain 102 is generated for each relevant transaction data 100, the blockchains 102 can be separated into, for example, a blockchain 102 that records only the transaction data 100 in which the used application 2 is common and a blockchain 102 that records only the update history of the master data 103.

Furthermore, the data processing unit 5 may record the same table information 101 in a plurality of the blockchains 102 at the same time. This allows the use of the history of the transaction data 100 for a plurality of purposes, such as an internal use and an inter-company use.

The display unit 6 is configured to display the GUI screen of the application 2 as well as other information.

The communication interface 7 is an interface that connects the terminals 10 to the network NW to transmit and receive various kinds of data.

As illustrated in Fig. 1, the server device 11 includes an application management unit 14 and an audit engine 15. The application management unit 14 manages the application 2. The audit engine 15 executes various kinds of procedures for the operation of the transaction audit system 1 in accordance with the program. The application management unit 14 and the audit engine 15 are connected so as to be allowed to mutually transmit and receive data. Details of the configurations and the functions of the application management unit 14 and the audit engine 15 will be described later. The application management unit 14 and the audit engine 15 may be stored in the same server device 11 as illustrated in Fig. 1, or may be stored in respective different server devices.

The database 12 is connected to the server device 11 as an external storage of the server device 11, and stores the master data 103. The database 12 may be a storage unit stored in the server device 11.

The business system 13 is a computer outside the blockchain server constituted by the terminals 10, and connected to the terminals 10 and the server device 11 via the network NW. The business system 13 is a system to perform the transactions, and is configured to input the transaction data 100c to the terminal 10 or the server device 11 via a linkage function of RESTful API, WebXML, or the like.

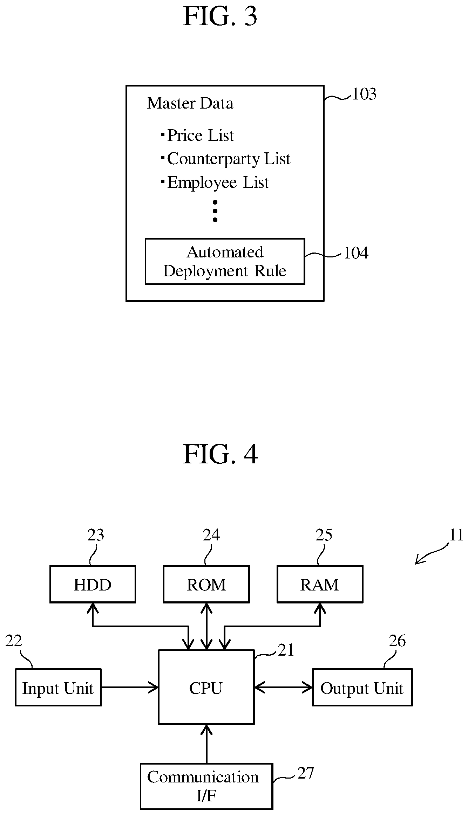

Fig. 3 is a schematic diagram illustrating an example of the master data 103. The master data 103 is data referred to in various transactions, and include, for example, a price list, a counterparty list, and an employee list as illustrated in Fig. 3.

The master data 103 includes, similarly to the transaction data 100, data items of, for example, master names, such as a price list, a counterparty list, and an employee list, a data model name, a version number, a name of a user who has performed generation and update, and an operation date and time, and includes values of the respective data items.

The master data 103 includes automated deployment rule data 104 of the transaction data 100a. The automated deployment rule data 104 is described based on the above-described rule, such as the internal rule and the external rule. The automated deployment rule data 104 is referred to by the audit engine 15, so as to automatically perform generation, update, and deletion of the new transaction data 100b, from the transaction data 100a input from the application 2.

When an irregular transaction, such as an exception processing and a special treatment, that is not described in the master data 103 or the automated deployment rule data 104 occurs, the transaction data 100a input from the terminal 10 may include a rule-exception approval content as the data item.

Next, the configuration and the function of the server device 11 will be described in detail with reference to Figs. 4 to 6. Fig. 4 is a block diagram illustrating an exemplary hardware configuration of the server device 11. As illustrated in Fig. 4, as an example, the server device 11 includes a CPU 21, an input unit 22, a hard disk drive (HDD) 23, a ROM 24, a RAM 25, an output unit 26, and a communication interface 27. As the components illustrated in Fig. 4, the same as those generally known can be employed.

The CPU 21 executes various kinds of procedures in accordance with a program to cause each function of the audit engine 15 described later to operate. This program is stored in the hard disk drive 23 and/or the ROM 24, and read by the CPU 21.

The input unit 22 is an interface that accepts the input of the transaction data 100a from the terminal 10 and outputs the transaction data 100a to the CPU 21, and the output unit 26 is an interface that outputs the transaction data 100b and the table information 101 generated by the audit engine 15 to the terminal 10.

The communication interface 27 is an interface that accepts the input of the transaction data 100c from the business system 13 and outputs the transaction data 100c to the CPU 21, and outputs various kinds of generated data to the business system 13 as necessary. The communication interface 27 has a function as an interface that downloads the application 2 from the application management unit 14 to the terminal 10.

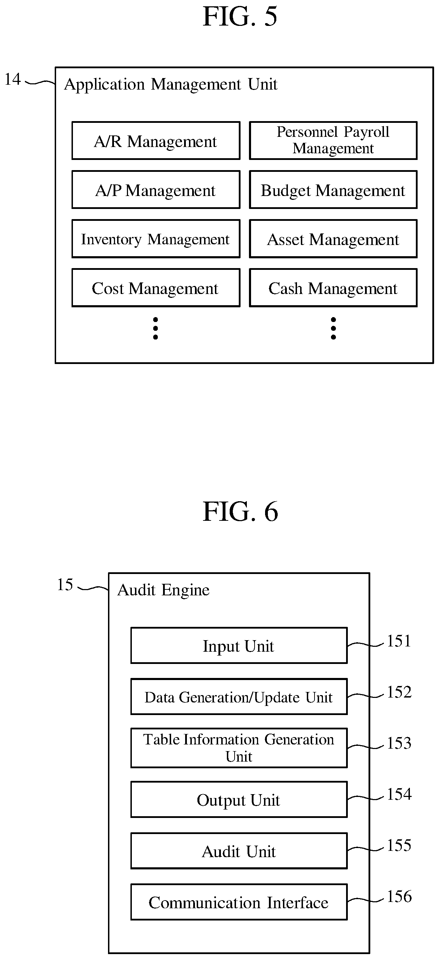

Fig. 5 is a function block diagram of the application management unit 14. As illustrated in Fig. 5, the application management unit 14 manages the various applications 2 to execute the transaction in the terminal 10. The application 2 is downloaded to the terminal 10 via the network NW.

The application 2 includes, for example, an A/R management application, an A/P management application, an inventory management application, a cost management application, a personnel payroll management application, a budget management application, an asset management application, and a cash management application.

The A/R management application is an application for credit management, such as accounts receivable and accounts due. For example, the A/R management application manages a sales credit (accounts receivable and the like) generated by sales until the sales credit is collected.

The A/P management application is a module for liabilities management, such as accounts payable-trade and accounts payable-other. For example, the A/P management application manages accounts payable (accounts payable-trade and the like) generated by product purchase until payment is executed.

The inventory management application is an application for managing, for example, the inventory of raw materials, products, goods, and the like handled by the company and the monetary valuation on the inventory.

The cost management application is an application for managing the cost of the products, the goods, the services, and the like handled by the company.

The personnel payroll management application is an application for, for example, personnel management of an employee from employment, salary increase, and promotion, to retirement, and for managing any money paid to the employee or paid for the employee including salary, bonus, retirement allowance, allowance, insurance money, and pension.

The budget management application is an application for managing, for example, various kinds of budgets of the company.

The asset management application is an application for managing, for example, various assets owned by the company.

The cash management application is an application for managing, for example, the cash owned by the company.

Fig. 6 is a function block diagram of the audit engine 15. As illustrated in Fig. 6, the audit engine 15 includes an input unit 151, a data generation/update unit 152, a table information generation unit 153, an output unit 154, an audit unit 155, and a communication interface 156.

The input unit 151 is an interface that accepts the input of the transaction data 100a from the input unit 22. The communication interface 156 is an interface that accepts the input of the transaction data 100c from the communication interface 27, and has the function of RESTful API, WebXML, and the like.

The data generation/update unit 152 refers to the master data 103 and the automated deployment rule data 104 when the transaction data 100a is input, generates new transaction data 100b, and outputs the transaction data 100b to the table information generation unit 153. The data generation/update unit 152 transmits the generated transaction data 100b to the terminal 10 via the output unit 154 and the application management unit 14 to display the transaction data 100b on the GUI screen of the application 2.

For example, a transaction of an order of a product X from another company occurs, the user inputs order data (transaction data 100a) to the GUI screen of the application 2 that manages the order and the shipment. At this time, the order data includes the data items of, for example, a data model name, an application name, a version number of the order data, a client name, a product name, a serial number, an order quantity, a user name, and a created date and time of the order data.

The data generation/update unit 152 refers to the master data 103 and the automated deployment rule data 104 to automatically generate shipment data (transaction data 100b) from the order data. The shipment data includes the data items of, for example, the data model name, the application name, an applied rule, a version number of the shipment data, a shipment destination, the product name, the serial number, a shipment quantity, a delivery deadline, the user name, and a created date and time of the shipment data. Thus, when one piece of transaction data 100b is generated from another piece of the transaction data 100a, the data item of the same content is taken over by the same data item name.

Here, for example, when there is a rule that "every 10 products X has to be shipped in bulk in a package" for the other company (client), the automated deployment rule data 104 is described so as to have the value of the data item of the "shipment quantity" in the shipment data as "10×Y." For example, when there is a rule that "the product X has to be shipped within two weeks from the order" for the other company, the automated deployment rule data 104 is described so as to add the data item of "delivery deadline" and the data item of the applied rule to the shipment data.

The transaction data 100, the master data 103, or the automated deployment rule data 104 needs to be updated when there is a change in rule, for example, a change of the contract, a specification change of the business and other changes regarding the operation of the company, when an input error of the transaction data 100a occurs, when an error is included in the generated transaction data 100b, when an additional order is made, and the like. In this case, the data item and value of the data item to be updated are input to the data generation/update unit 152 as an update instruction by, for example, the user's operation from the terminal 10. The data generation/update unit 152 updates the transaction data 100, the master data 103, or the automated deployment rule data 104 according to the update instruction from the terminal 10, and outputs the updated data to the table information generation unit 153.

The table information generation unit 153 uses an extended dynamic form (XDF) framework to decompose the input transaction data 100a and the generated transaction data 100b into the data items and the values regardless of the data format, thus generating table information 101a and 101b, respectively (simply referred to as "table information 101 (first table information)" in some cases). The XDF framework is a function of dynamically treating a menu item, a screen design, and a data model based on a data model definition, a screen definition, a file output definition, and a file input definition. The use of the XDF framework allows defining a data model of a type in which the item value of the data model is recorded in not a column but another row of a database.

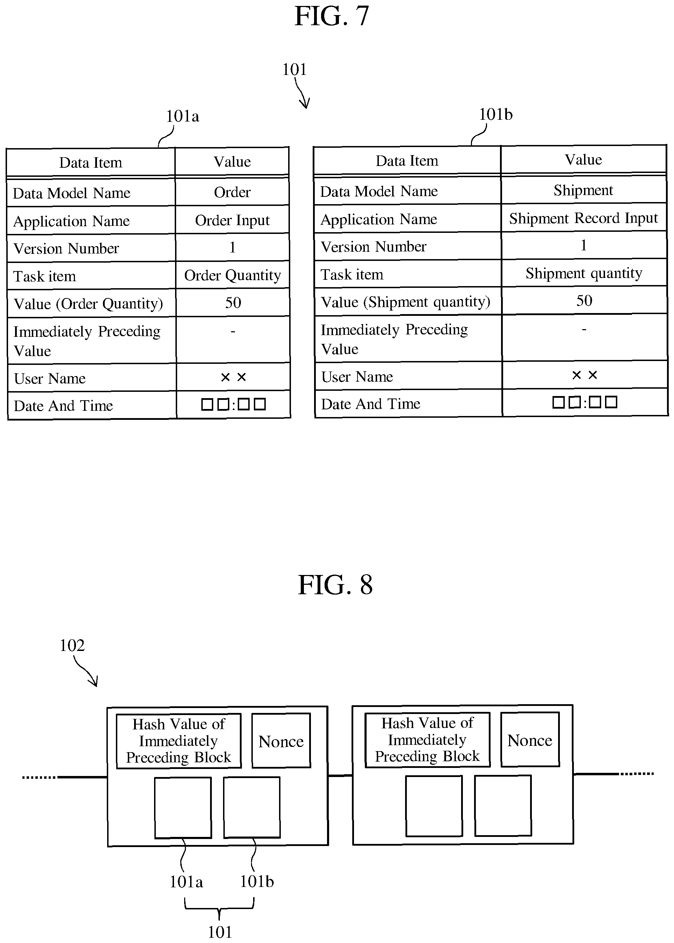

Fig. 7 is a schematic diagram illustrating an example of the table information 101. As illustrated in Fig. 7, the table information 101 includes the data items of, for example, the data model name, the application name, the applied rule, the version number, the task item, the value, a previous value (if any), a name of a user who has performed update and generation of data, and an operation time.

As described above, when an irregular transaction occurs and the transaction data 100a including the rule exception approval content is input, the table information generation unit 153 generates the table information 101 based on the transaction data 100a and the rule exception approval content.

When the transaction data 100c is input from the business system 13, the table information generation unit 153 generates the table information 101 based on only the transaction data 100c. In this case, since the used application before the transaction data 100c is generated in the business system 13 and the applied rule are unknown, these pieces of the information are not included in the table information 101.

The output unit 154 outputs the table information 101 generated by the table information generation unit 153 to the terminal 10.

The data processing unit 5 of the terminal 10 generates a hash value from the received table information 101 using a predetermined hash function, and transmits the hash value to the audit unit 155 of the audit engine 15 via the communication interface 7.

The data processing unit 5 performs a process to record the table information 101 and a hash value of an immediately preceding block in a block for the blockchain 102, and stores the table information 101 and the hash value of an immediately preceding block in the blockchain database 4. Fig. 8 is a schematic diagram illustrating an exemplary blockchain 102. As illustrated in Fig. 8, the blockchain 102 includes the table information 101, the hash value of the immediately preceding block, and a nonce in each block. The nonce means any given value.

The audit unit 155 compares the hash value to be generated based on the blockchain 102 stored in the blockchain database 4 of the terminal 10 with the hash value received from the terminal 10 to verify whether the blockchain 102 is tampered or deleted without going through the regular process or not. When the blockchain 102 is determined to be tampered, the audit unit 155 transmits a warning to the output unit 154.

The output unit 154 transmits the warning received from the audit unit 155 to the terminal 10 to display the warning on the display unit 6. As a display method of the warning, for example, a method of displaying the warning in a message box on the display unit 6, and a method of displaying the tampered or deleted part in red on the GUI screen of the application 2 or the blockchain 102.

Thus, even when the data format of the input transaction data 100a and the data item held are different, all the transaction data 100a and 100b are decomposed into the predetermined data items and their values and converted into a unified format of the table information 101, thereby allowing all the data to be recorded in the blockchain 102 in the same format without depending on a specific data format. Since the applied rule is recorded as the data item in the blockchain 102, the basis of the transaction data 100 can be grasped.

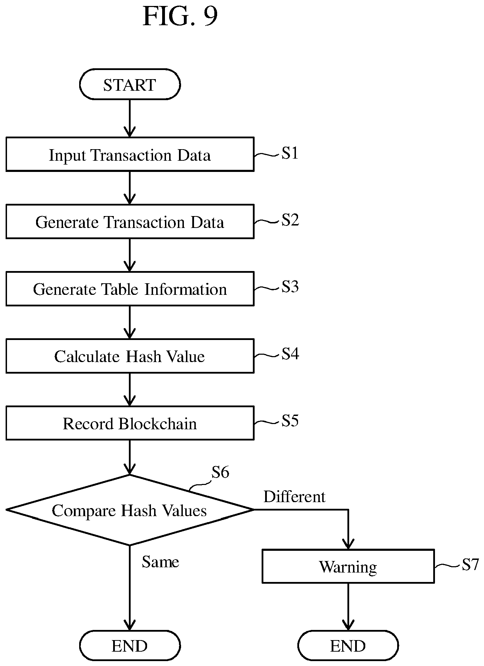

Next, with reference to Fig. 9, a description will be given of a recording process of the transaction data 100 in the transaction audit system 1 according to the first embodiment. Fig. 9 is a flowchart illustrating the recording process of the transaction data 100 according to the embodiment.

In Step S1, the user inputs the transaction data 100a from the GUI screen of the application 2 downloaded to the terminal 10. The input transaction data 100a is transmitted to the input unit 151 of the audit engine 15 via the communication interface 7 and the network NW. The input unit 151 outputs the transaction data 100a to the data generation/update unit 152.

In Step S2, upon receiving the transaction data 100a, the data generation/update unit 152 refers to the master data 103 stored in the database 12 to generate the new transaction data 100b. The data generation/update unit 152 outputs the transaction data 100a and 100b to the table information generation unit 153. At this time, the transaction data 100a and 100b include the data item regarding the applied rule.

For example, when the input transaction data 100a is order data, the transaction data 100b generated by the data generation/update unit 152 is shipment data.

In Step S3, the table information generation unit 153 decomposes each of the transaction data 100a and 100b into the data items and their values with the XDF framework, thus generating the table information 101. The table information generation unit 153 transmits the table information 101 to the communication interface 7 of the terminal 10 via the output unit 154. The communication interface 7 outputs the table information 101 to the data processing unit 5.

In Step S4, the data processing unit 5 generates the hash value from the table information 101, and transmits the hash value to the audit unit 155 of the audit engine 15 via the communication interface 7.

In Step S5, the data processing unit 5 records the table information 101 and the hash value of the immediately preceding block in the block for the blockchain 102, and stores the table information 101 and the hash value in the blockchain database 4.

In Step S6, the audit unit 155 compares the hash value received from the terminal 10 in Step S4 with the hash value calculated from the block for the blockchain 102 stored in the blockchain database 4. When these hash values are the same, the blockchain 102 stored in the blockchain database 4 is determined not to be tampered or deleted without going through the regular process, and the recording process is ended.

When the hash values compared in Step S6 are different, in Step S7, the audit unit 155 determines that the blockchain 102 stored in the blockchain database 4 is tampered or deleted without going through the regular process, and transmits the warning to the terminal 10 via the output unit 154. The terminal 10 receives the warning via the communication interface 7 and displays the warning on the display unit 6, thus ending the recording process.

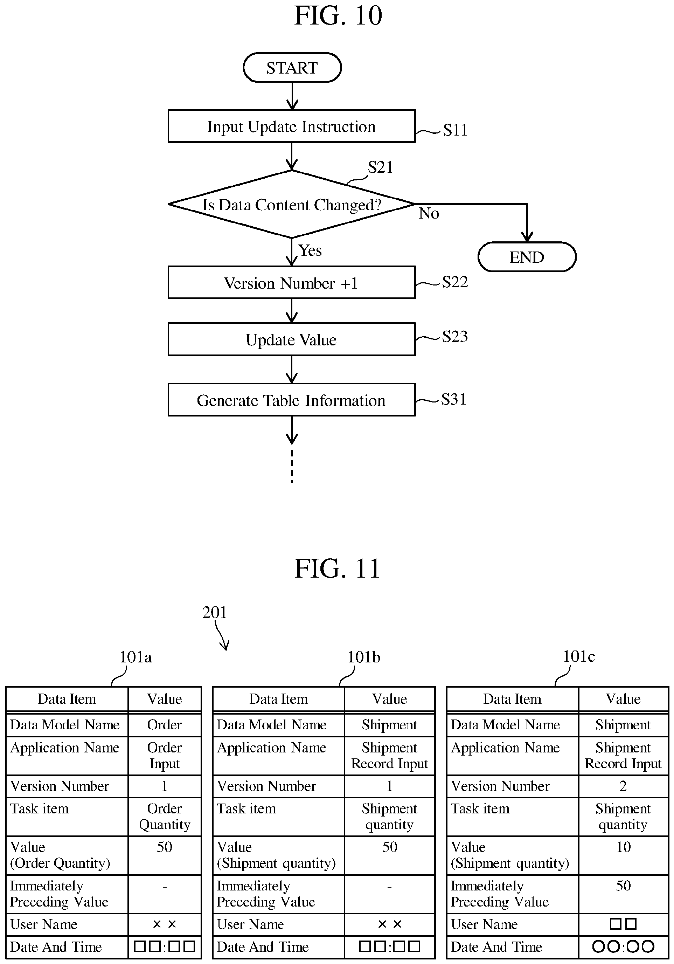

Next, with reference to Figs. 10 and 11, a description will be given of a case of updating the transaction data 100. Fig. 10 is a flowchart illustrating the update process of the transaction data 100. The following describes the case of updating the transaction data 100b.

In Step S11, the user inputs the update instruction of the transaction data 100 from the GUI screen of the application 2.

In Step S21, the data generation/update unit 152 determines whether the update instruction of the transaction data 100b input in Step S1 is to change the content recorded in the blockchain 102 or not.

When the update instruction is to change the content recorded in the blockchain 102 (Yes in Step S21), the data generation/update unit 152 adds +1 to the version number of the transaction data 100b in Step S22.

Next, in Step S23, the data generation/update unit 152 changes the data items and their values to be changed of the transaction data 100b, such as an update date and time, a name of updater, and a value to be changed. In accordance with the change of the transaction data 100b, the data generation/update unit 152 refers to the master data 103 to automatically change the data items and their values to be changed of the generated transaction data 100b.

In Step S31, the table information generation unit 153 generates table information 101c that includes the updated data items and their values and the data items and their values before the update, based on the updated transaction data 100b with the XDF framework. Fig. 11 is a schematic diagram illustrating table information 201 (second table information) generated in accordance with the update of the transaction data 100b. As illustrated in Fig. 11, when the transaction data 100b is updated, the table information 201 includes the table information 101a and 101b before the update and the table information 101c generated by the update.

After Step S31, similarly to Step S4 and its following in Fig. 9, the recording process to the blockchain 102 is performed based on the table information 201.

Meanwhile, when the update instruction is not to change the content recorded in the blockchain 102 (No in Step S21), the processes after Step S21 are not performed and the recording process is ended.

When the transaction data 100a, the master data 103, or the automated deployment rule data 104 is updated, similarly, the user gives the update instruction, and the table information generation unit 153 generates the table information 201, thus performing the recording process to the blockchain 102 based on the table information 201.

As described above, the transaction audit system 1 according to the embodiment records the history of the generation and the update of the transaction data 100, the master data 103, and the automated deployment rule data 104 as the blockchain 102. Therefore, the data can be protected from unauthorized tampering or deletion, and the authenticity of the data can be ensured. Thus, since only the transaction history is the target of the protection by the blockchain 102, the workload at executing the transaction can be reduced.

Since the result of the transaction is recorded with the information regarding the applied rule and the used application, the causal relationship between the result of the transaction, the applied rule and the used application is easily grasped. Furthermore, whether the various rules are surely applied or not is objectively secured.

The program of the transaction audit system 1 needs not to be changed when the rule is changed, and history of the change of the rule can be recorded by changing the master data 103 or the automated deployment rule data 104. Therefore, validation of the data at a later date is facilitated.

Thus, in the audit work for securing soundness and fairness of the company, the audit work can be performed at low cost without the need for significant time for the analysis of the transaction data 100.

Furthermore, since unauthorized tampering, deletion, or the like can be detected by the comparative verification between the accumulated history and the current state of original data, the data protection effect similar to that in the case where all the data are the target of the protection by the blockchain 102 can be provided. A state of the data at a point in the past that cannot be directly obtained from the current data can be obtained in a state where the absence of the unauthorized tampering, deletion, or the like is guaranteed by the blockchain 102, and a background to the state also can be obtained. Accordingly, in the audit work of the company, the comparison between the values in the financial statements and the transaction data as basis of the values in the financial statements is facilitated, and it can be verified when and how, by which user, based on which rule, the transaction data has been manipulated. Any given data existed at a point can be reproduced on a common mechanism.

### [Second Embodiment]

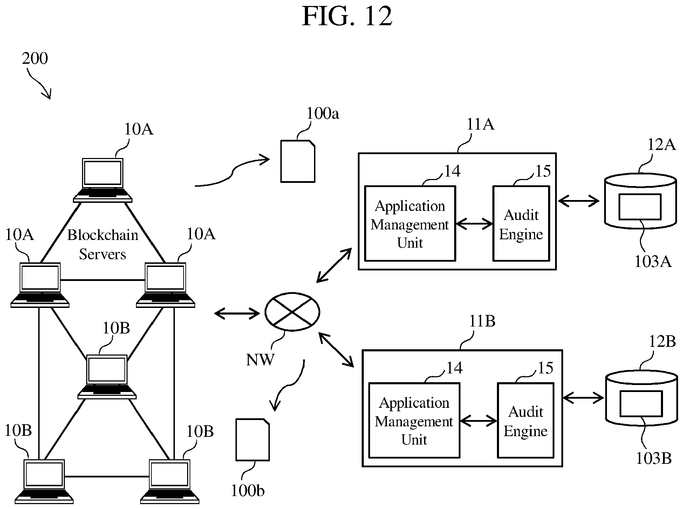

With reference to Fig. 12, a transaction audit system 200 according to the second embodiment will be described. The transaction audit system 200 of the embodiment is different from the first embodiment in that the transaction audit system 200 is introduced in a plurality of companies and records the transaction data 100 in the plurality of companies. Since the components of the transaction audit system 200 are similar to those in the first embodiment, the explanations are omitted.

Fig. 12 is a schematic diagram illustrating an overall configuration of the transaction audit system 200 of the embodiment. In the example illustrated in Fig. 12, the transaction audit system 200 is introduced in two companies A and B. A plurality of terminals 10A owned by the company A and a plurality of terminals 10B owned by the company B are mutually peer-to-peer (P2P) connected, and each function as a node of a blockchain server.

The companies A and B include server devices 11A and 11B and databases 12A and 12B, respectively. The terminals 10A and 10B and the server devices 11A and 11B are connected to the same network NW. The database 12A of the company A stores master data 103A, and the database 12B of the company B stores master data 103B.

For example, when a user belonging to the company A inputs the transaction data 100a from the terminal A, the master data 103A is referred to, and the transaction data 100b is generated, the transaction data 100b can be output to the terminal 10B and the server device 11B of the company B.

The transaction audit system 200 of this embodiment has the above-described configuration, thereby allowing recording the transaction data 100 of a plurality of companies in the blockchain 102. Accordingly, since the causal relationship in the business-to-business transaction can be retroactively verified, the authenticity of the business-to-business transaction is further guaranteed. Since the transaction data 100 of a plurality of companies is present on the common blockchain 102, it can be utilized for a reference base of information for AI and the like.

In the transaction audit system 200 of this embodiment, the transaction data 100 is recorded in the blockchain 102, which cannot be tampered with, together with the applied rule in generation of the transaction data 100. Therefore, when one data item of the transaction data 100 has a value different from a value that should be, it can be estimated that the applied rule had an error. Furthermore, when one data item of the transaction data 100 has a value different from a value that should be in spite that the applied rule is correct, it can be estimated that the program to operate the audit engine 15 had an error.

While the embodiments of the present disclosure have been described, these embodiments have been presented by way of examples, and are not intended to limit the scope of the invention. The novel embodiments described herein can be embodied in a variety of other configurations, and various omissions, substitutions, and changes can be made without departing from the gist of the invention. These embodiments and their modifications are included in the scope of the invention described in the claims and their equivalents as well as included in the scope and the gist of the invention.

### Reference Signs List

- 1, 200: Transaction audit system
- 2: Application
- 3: Input device
- 4: Blockchain database
- 5: Data processing unit
- 6: Display unit
- 7: Communication interface
- 10: Terminal
- 11: Server device
- 12: Database
- 13: Business system
- 14: Application management unit
- 15: Audit engine
- 100: Transaction data
- 101, 201: Table information
- 102: Blockchain
- 103: Master data
- 151: Input unit
- 152: Data generation/update unit
- 153: Table information generation unit
- 154: Output unit
- 155: Audit unit
- 156: Communication interface

## Claims

1. A transaction audit system comprising:
a terminal that constitutes a blockchain server and includes a blockchain database and an application configured to input first transaction data;
a database that stores master data, the master data including automated deployment rule data to generate second transaction data from the first transaction data; and
an audit engine connected to the terminal and the database,
wherein the first transaction data is input to the audit engine by the terminal,
wherein the audit engine refers to the master data to generate the second transaction data,
wherein the first transaction data and the second transaction data are each decomposed into a data item and a value of the data item to generate first table information,
wherein the data item includes at least a data model name, a version number, an application name, a user name, and an operation date and time, and
wherein a block for a blockchain is generated based on the first table information and recorded in the blockchain database by the terminal.

2. The transaction audit system according to claim 1,
wherein the audit engine further audits whether the blockchain is tampered or not.

3. The transaction audit system according to claim 1,
wherein an update instruction of the first transaction data, the second transaction data, or the master data is input to the audit engine by the terminal,
wherein the audit engine generates second table information by adding 1 to the version number and updating the data item and the value of the data item according to the update instruction, and
wherein a block for the blockchain is generated based on the second table information and recorded in the blockchain database by the terminal.

4. The transaction audit system according to claim 1, further comprising
a business system connected to the audit engine,
wherein third transaction data is input to the audit engine by the business system.

5. The transaction audit system according to any one of claims 1 to 4,
wherein the transaction audit system is introduced in a plurality of companies.
